# EUROPEAN PATENT APPLICATION

(11) **EP 4 459 842 A1**
(43) Date of publication of application: **06.11.2024**
(21) Application number: 24159032.2
(22) Date of filing: 22.02.2024
(51) Int. Cl.: H02K 1/20, H02K 3/38, H02K 3/50, H02K 5/20, H02K 9/19

(54) **MOTOR STATOR THREE-PHASE TERMINAL COOLING STRUCTURE**

(30) Priority: 05.05.2023 US 202363500278 P; 08.09.2023 CN 202311157808
(71) Applicant: Delta Electronics, Inc., Taoyuan City 333 (TW)
(72) Inventor: SU, Yu-Lin, 333 Taoyuan (TW); CHOU, Mu-Hsien, 333 Taoyuan (TW); TSAI, Shian-Min, 333 Taoyuan (TW)
(74) Representative: Nederlandsch Octrooibureau

(57) **Abstract**

A motor stator three-phase terminal cooling structure includes a stator body, a stator bracket, three-phase terminals and an insulating bracket. The stator body includes stator cooling channels and stator windings. The stator bracket is connected to the stator body. The stator bracket has a first oil outlet and a second oil outlet on a side facing away from the stator body to be connected to the stator cooling channels. The three-phase terminals are electrically connected to the stator windings respectively. The insulating bracket is located on the side of the stator bracket facing away from the stator body and at least partially covers the three-phase terminals. A first flow channel receives cooling oil from the first oil outlet and has multiple grids. A second flow channel receives the cooling oil from the second oil outlet and has an internal channel.

## Description

### BACKGROUND

### Field of Invention

The present disclosure relates to a motor stator three-phase terminal cooling structure, and its insulating bracket serving as a cooling oil guide structure.

### Description of Related Art

Three-phase terminals of a conventional motor stator are only connected to a power supply and no heat dissipation structure is designed for three-phase terminals. Due to the issues of metal contact area with connecting wires, there may be another heat source on the three-phase terminals when the motor is operating. If the heat dissipation for the three-phase terminals is performed by air cooling or indirect cooling with a water jacket, an insufficient cooling capacity may occur.

### SUMMARY

The present disclosure proposes a motor stator three-phase terminal cooling structure for overcoming or alleviating the problems of the prior art.

In one or more embodiments, a motor stator three-phase terminal cooling structure includes a stator body, a stator bracket, three-phase terminals and an insulating bracket. The stator body includes a plurality of stator cooling channels and a plurality of stator windings. The stator bracket is connected to the stator body. The stator bracket has a first oil outlet and a second oil outlet on a side facing away from the stator body to be connected to the stator cooling channels. The three-phase terminals are electrically connected to the stator windings respectively. The insulating bracket is located on the side of the stator bracket facing away from the stator body and at least partially covering the three-phase terminals, and the insulating bracket has a first flow channel and a second flow channel. The first flow channel receives cooling oil from the first oil outlet and has multiple grids. The second flow channel receives the cooling oil from the second oil outlet and has an internal channel.

In one or more embodiments, the insulating bracket comprises a first insulating bracket portion and a second insulating bracket portion, and the three-phase terminals are located between the first insulating bracket portion and the second insulating bracket portion.

In one or more embodiments, the first flow channel is formed on the first insulating bracket portion, and a side of the first insulating bracket portion facing the stator bracket has a concave groove serving as a cooling oil receiving port of the first flow channel, and the concave groove is aligned with the first oil outlet.

In one or more embodiments, the concave groove and the grids are located on two opposite sides of the first insulating bracket portion.

In one or more embodiments, the first insulating bracket portion has an inclined plane allowing the cooling oil to be flowed down from the concave groove by gravity, and then flows sequentially to three of the grids corresponding to the three-phase terminals to form the first flow channel.

In one or more embodiments, the grids are a plurality of depressions on the first insulating bracket portion and form a three-stage-stepped arrangement structure.

In one or more embodiments, the second flow channel is formed on the second insulating bracket portion, and the second insulating bracket portion has the internal channel, and an inlet port of the internal channel is aligned with the second oil outlet to receive the cooling oil.

In one or more embodiments, the second insulating bracket portion comprises a plurality of terminal slots, and the terminal slots are adjacent to an outlet port of the internal channel.

In one or more embodiments, the terminal slots are aligned with the grids respectively.

In one or more embodiments, the terminal slots are arranged side by side to accommodate connection ends of the three-phase terminals, and the terminal slots are adjacent to the outlet port of the internal channel.

In one or more embodiments, the cooling oil flows out from the outlet port of the internal channel is directly dripped onto the three-phase terminals by gravity.

In one or more embodiments, the stator body has a circumferential outer wall, and the stator cooling channels are located between the stator windings and the circumferential outer wall.

In one or more embodiments, a side of the stator bracket facing the stator body has an bracket cooling channel connected to the stator cooling channels, and the first oil outlet and the second oil outlet are connected to the bracket cooling channel.

In one or more embodiments, the bracket cooling channel is an annular continuous flow channel.

In one or more embodiments, the stator bracket has a plurality of through holes through which the three-phase terminals are electrically connected to the stator windings respectively.

The motor stator three-phase terminal cooling structure disclosed herein adds a cooling structure of stator three-phase terminals by means of its stator bracket and insulating bracket. The insulating bracket contains or forms a first flow channel and a second flow channel. The first flow channel receives cooling oil from the first oil outlet of the stator bracket and has multiple grids. The second flow channel receives the cooling oil from the second oil outlet of the stator bracket and has an internal channel. By means of the first flow channel and the second flow channel, the cooling oil indirectly and directly thermally coupled to the opposite sides of the stator three-phase terminals to achieve the heat dissipation.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a perspective view of a motor stator three-phase terminal cooling structure according to some embodiments of the present disclosure;
Fig. 2 illustrates an exploded view of the motor stator three-phase terminal cooling structure in Fig. 1;
Fig. 3 illustrates an exploded view of a portion of a motor stator three-phase terminal cooling structure according to some embodiments of the present disclosure;
Fig. 4 illustrates a perspective view of a stator body, a stator bracket and three-phase terminals according to some embodiments of the present disclosure;
Figs. 5 and 6 illustrate two oppositw sides of a stator bracket according to according to some embodiments of the present disclosure;
Figs. 7 and 8 illustrate two oppositw sides of a first insulating bracket portion according to according to some embodiments of the present disclosure;
Figs. 9 and 10 illustrate two perspective views of a second insulating bracket portion according to according to some embodiments of the present disclosure; and
Fig. 11 illustrates an enlarged view of a first flow channel and a second flow channel of a motor stator three-phase terminal cooling structure according to some embodiments of the present disclosure.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

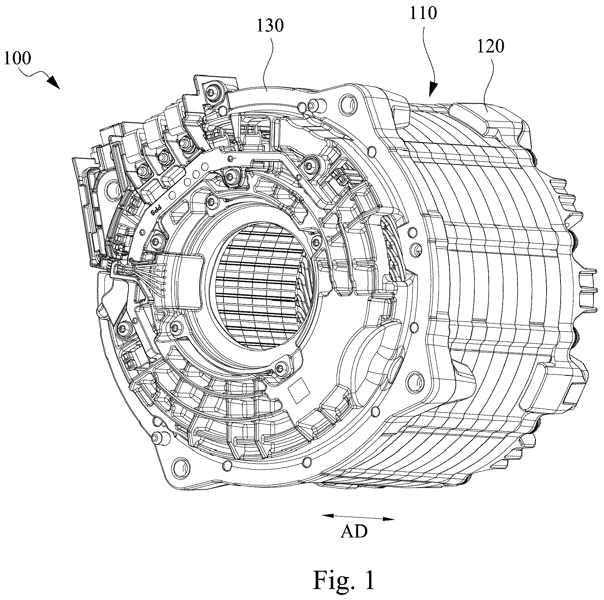

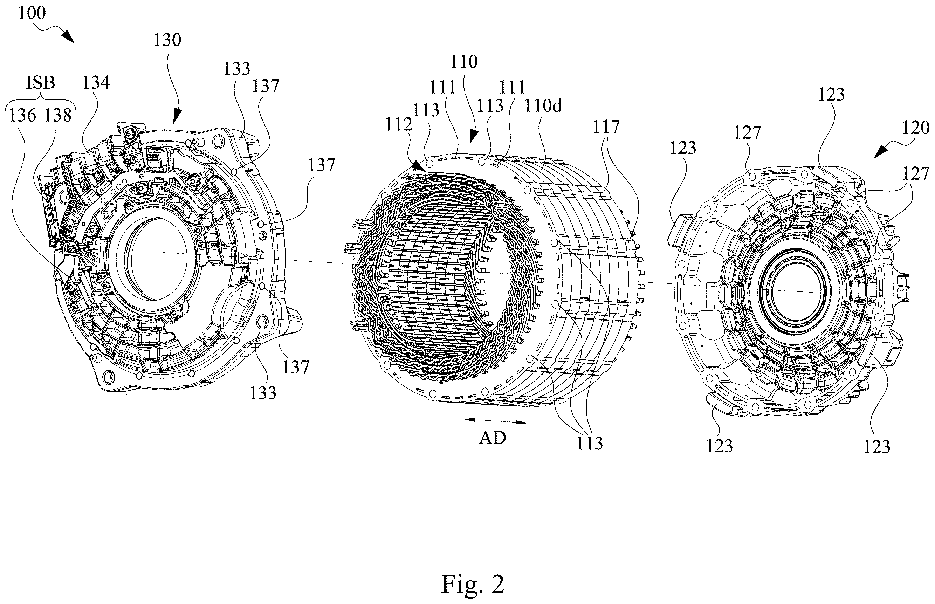

Reference is made to Figs. 1 and 2, Fig. 1 illustrates a perspective view of a motor stator three-phase terminal cooling structure according to some embodiments of the present disclosure, and Fig. 2 illustrates an exploded view of the motor stator three-phase terminal cooling structure in Fig. 1. The motor stator three-phase terminal cooling structure 100 includes a stator body 110, a stator bracket 120 and a stator bracket 130. The stator bracket 120 is assembled to a first side of the stator body 110 to cool the stator windings 112 at the first side of the stator body 110. The stator bracket 130 is assembled to a second side of the stator body 110 to cool the stator windings 112 at the second side of the stator body 110. The stator bracket 120 includes a plurality of positioning posts 123. When the stator bracket 120 is connected to the first side of the stator body 110, the positioning posts 123 abut a first side of the circumferential outer wall 110d of the stator body 110. The stator bracket 130 also includes a plurality of positioning posts 133. When the stator bracket 130 is connected to the second side of the stator body 110, the positioning posts 133 abut a second side of the circumferential outer wall 110d of the stator body 110. In some embodiments of the present invention, when the stator bracket 120 is connected to the first side of the stator body 110, each positioning post 123 is located between two corresponding adjacent axial protrusions 117 on the first side of the circumferential outer wall 110d. When the stator bracket 130 is connected to the second side of the stator body 110, each positioning post 133 is located between two corresponding adjacent axial protrusions 117 on the second side of the circumferential outer wall 110d. Therefore, the stator bracket 120 is firmly positioned on the first side of the stator body 110 in the circumferential direction by means of the positioning posts 123, and the stator bracket 130 is firmly positioned on the second side of the stator body 110 in the circumferential direction by means of the positioning posts 133. At this time, the four positioning posts 123 and the four positioning posts 133 are respectively aligned in the axial direction AD, which is convenient for threading and locking using fasteners. The stator bracket 120 includes a plurality of bracket assembly holes 127, and the stator bracket 130 includes a plurality of bracket assembly holes 137. A plurality of fasteners are used to secure the stator bracket 120 and the stator bracket 130 to two opposite sides of the stator body 110 through the bracket assembly holes (127, 137) and stator assembly holes 113 of the stator body 110. In some embodiments of the present invention, the stator body 110 further includes a plurality of stator cooling channels 111 and a plurality of stator windings 112. These stator cooling channels 111 penetrate through the stator body 110 in the axial direction AD and are arranged near an outer circumference of the stator body 110 in the circumferential direction, allowing cooling oil to pass through to cool the stator body 110. In some embodiments of the invention, the stator cooling channels 111 are located between the stator windings 112 and the circumferential outer wall 110d. In some embodiments of the present invention, the stator cooling channels 111 of the stator body 110 have the same or nearly similar dimensions.

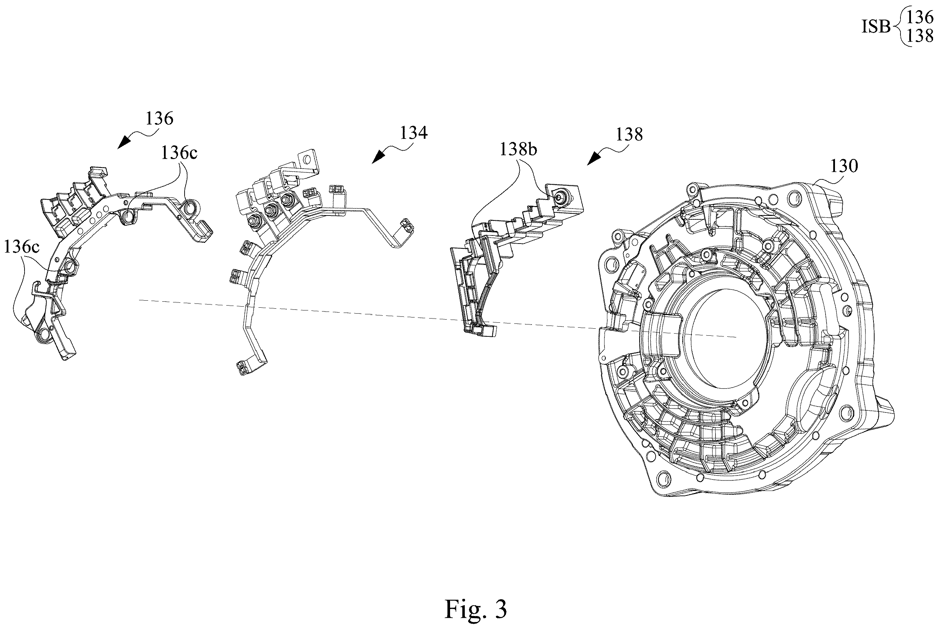

Reference is made to Fig. 3, which illustrates an exploded view of a portion (i.e., near the stator bracket 130) of a motor stator three-phase terminal cooling structure according to some embodiments of the present disclosure. The motor stator structure includes stator three-phase terminals 134 and an insulating bracket ISB arranged on a side of the stator bracket 130 facing away from the stator body 110. In some embodiments of the present invention, the insulating bracket ISB includes a first insulating bracket portion 136 and a second insulating bracket portion 138, and the stator three-phase terminals 134 are located between the first insulating bracket portion 136 and the second insulating bracket portion 138. The first insulating bracket portion 136 has assembly holes 136c, and the second insulating bracket portion 138 has assembly holes 138b. Fasteners can be used to pass through these assembly holes 136c and 138b to secure the stator three-phase terminals 134 to the side of the stator bracket 130 facing away the stator body 110.

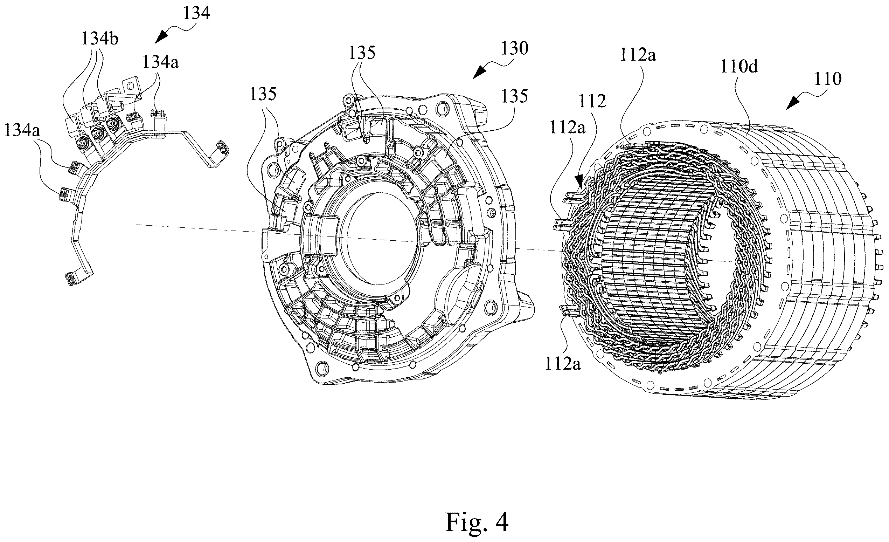

Reference is made to Fig. 4, which illustrates a perspective view of a stator body 110, a stator bracket 130 and stator three-phase terminals 134 according to some embodiments of the present disclosure. In some embodiments of the present invention, the stator bracket 130 has a plurality of through holes 135, and connection ends 134a of the stator three-phase terminals 134 are electrically connected to corresponding wire ends 112a of the stator windings 112 through the through holes 135. The stator three-phase terminals 134 are located on the side of the stator bracket 130 facing away from the stator body 110.

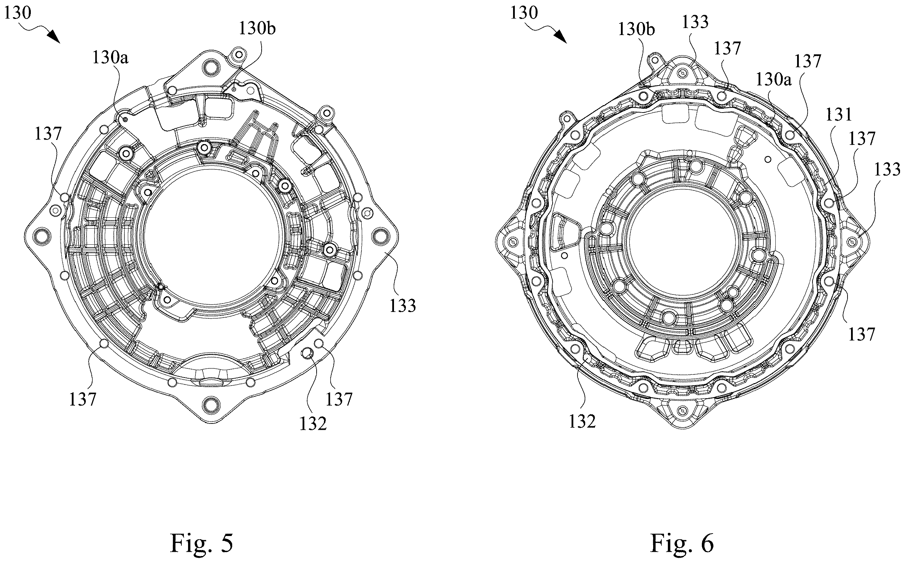

Reference is made to Figs. 5 and 6, which illustrate two oppositw sides of a stator bracket 130 according to according to some embodiments of the present disclosure. Fig. 5 illustrates the side of the stator bracket 130 facing away from the stator body 110. Fig. 6 shows the side of the stator bracket 130 facing the stator body 110. A side of the stator bracket 130 facing toward the stator body 110 is recessed with an annular continuous bracket cooling channel 131. The bracket cooling channel 131 is designed to avoid the position of the bracket assembly holes 137 in the radial direction. For example, a width of the flow channel is reduced while encountering the bracket assembly holes 137, or the flow channel is bypassed in the radial direction while encountering the bracket assembly holes 137. When the stator bracket 130 is connected to the second side of the stator body 110, the bracket cooling channel 131 is (fluid-communicably) connected to the stator cooling channels 111 of the stator body 110 (referring to Fig. 2). The side of the stator bracket 130 facing away from the stator body 110 has a first oil outlet 130a and a second oil outlet 130b. The first and second oil outlets (130a, 130b) are both (fluid-communicably) connected to the bracket cooling channel 131, and thus also (fluid-communicably) connected to the stator cooling channels 111. In addition, the stator bracket 130 has an oil inlet 132 on a side facing away from the stator body 110. The oil inlet 132 is (fluid-communicably) connected to the bracket cooling channel 131 to input the cooling oil.

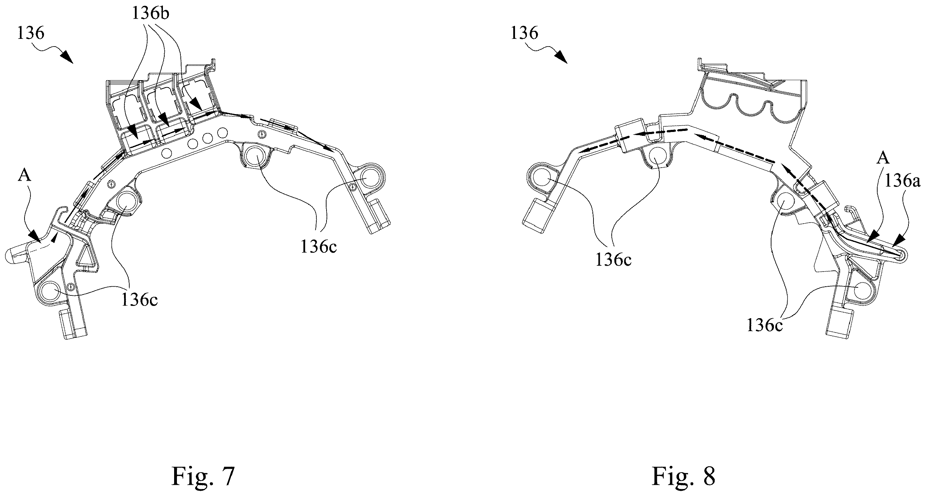

Reference is made to Figs. 7 and 8, which illustrates two oppositw sides of a first insulating bracket portion according to according to some embodiments of the present disclosure. Fig. 7 shows the side of the first insulating bracket portion 136 facing away from the stator bracket 130. Fig. 8 shows the side of the first insulating bracket portion 136 facing the stator bracket 130. In some embodiments of the invention, the first insulating bracket portion 136 is used to form a first flow channel (A). The side of the first insulating bracket portion 136 facing the stator bracket 130 has a concave groove 136a serving as a cooling oil receiving port of the first flow channel (A). One end of the concave groove 136a is aligned with the first oil outlet 130a of the stator bracket 130 to receive the cooling oil outlet from the first oil outlet 130a (please refer to Fig. 5). One end of the concave groove 136a has a cutout to allow the cooling oil to be flowed out to the side of the first insulating bracket portion 136 facing away from the stator bracket 130. The side of the first insulating bracket portion 136 facing away from the stator bracket 130 has three grids 136b corresponding to the three-phase terminal buses respectively. These grids 136b are designed as depressions on the first insulating bracket portion 136, which forming a three-stage-stepped arrangement structure. The cooling oil needs to fill up individual grids 136b respectively before flowing out sequentially to extend the thermal coupling time between the cooling oil and the first insulating bracket portion 136. During this period, the cooling oil is indirectly coupled with the stator three-phase terminals 134. Therefore, the three-stage-stepped arrangement structure can extend the thermal coupling time and improve the cooling effeciency. In other words, the concave groove 136a and the grids 136b are located at two opposite ends of the same surface of the first insulating bracket portion 136. The first flow channel (A) is also equipped with one or several ribs to guide the cooling oil. The first insulating bracket portion 136 also has a plurality of assembly holes 136c through which fasteners can be used to secure the first insulating bracket portion 136 to the side of the stator bracket 130 facing away from the stator body 110.

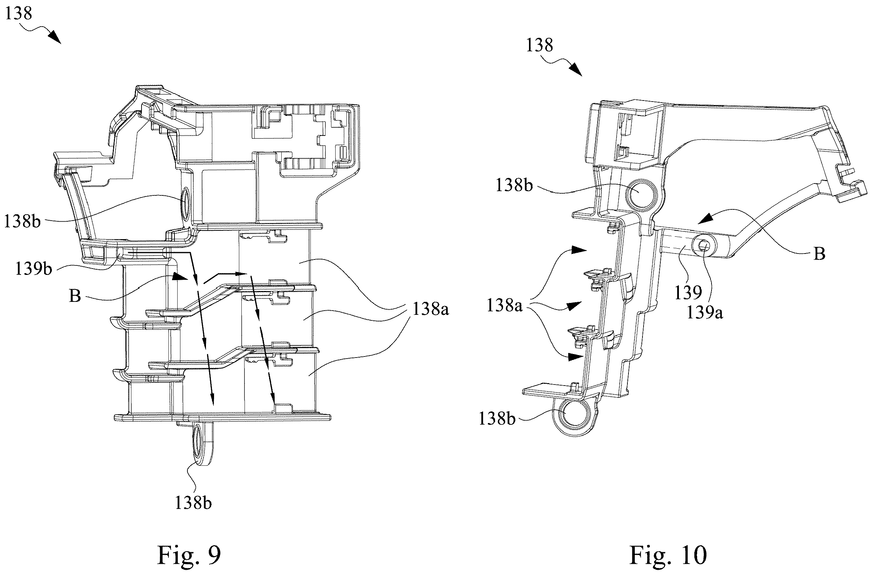

Reference is made to Figs. 9 and 10, which illustrate two perspective views of a second insulating bracket portion 138 according to according to some embodiments of the present disclosure. Fig. 9 shows a perspective view of the second insulating bracket portion 138 facing away from the stator bracket 130. Fig. 10 illustrates a perspective viw of the second insulating bracket portion 138 facing the stator bracket 130. In some embodiments of the invention, the second insulating bracket portion 138 is used to form a second flow channel (B). The second flow channel (B) of the second insulating bracket portion 138 has an internal channel 139. An inlet port 139a of the internal channel 139 is aligned with the second oil outlet 130b of the stator bracket 130, thereby receiving the cooling oil from the second oil outlet 130b (please refer to Fig. 5). In addition, the second insulating bracket portion 138 also has three terminal slots 138a. These terminal slots 138a are arranged side by side to accommodate the three connection ends 134b of the stator three-phase terminals 134 (please refer to Fig. 4), and are adjacent to an outlet port 139b of the internal channel 139. Therefore, the cooling oil flows out from the outlet port 139b of the internal channel 139 will be directly dripped downstream onto the terminal slots 138a along the arrow direction (second flow channel (B)) in the drawings. The second insulating bracket portion 138 also has a plurality of assembly holes 138b through which fasteners can be used to secure the stator three-phase terminals 134 to the side of the stator bracket 130 facing away from the stator body 110.

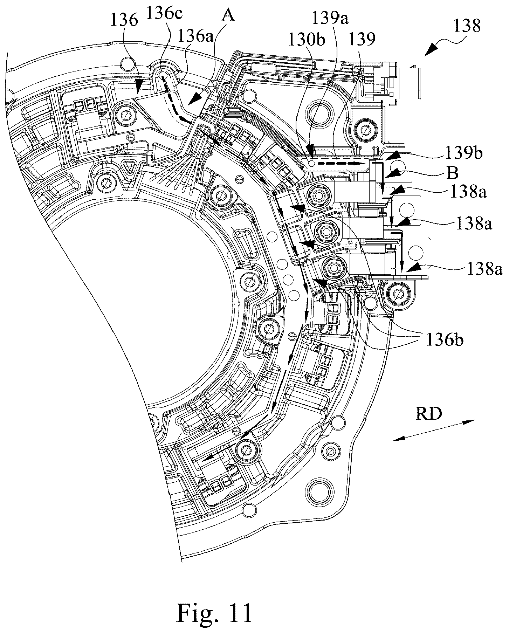

Reference is made to Fig. 11, which illustrates an enlarged view of a first flow channel and a second flow channel of a motor stator three-phase terminal cooling structure according to some embodiments of the present disclosure. This figure shows the first flow channel (A) and the second flow channel (B) formed by the stator three-phase terminals 134, the first insulating bracket portion 136 and the second insulating bracket portion 138 attached on the side of the stator bracket 130 facing away from the stator body 110. Specifically, the path and composition of the first flow channel (A) is described as follows: one end of the concave groove 136a of the first insulating bracket portion 136 is aligned with the first oil outlet 130a of the stator bracket 130 to receive the cooling oil. After the cooling oil flows out of the concave groove 136a, it flows to the side of the first insulating bracket portion 136 facing away from the stator bracket 130, and flows down along an inclined plane of the first insulating bracket portion 136 by gravity, and then flows sequentially to and fills up the three grids 136b corresponding to the three-phase terminal buses on the first insulating bracket portion 136, so as to form the first flow channel (A). The first flow channel (A) allows the cooling oil to pass through the first insulating bracket portion 136 to indirectly cool the stator three-phase terminals 134. The path and composition of the second flow channel (B) is described as follows: the inlet port 139a of the internal channel 139 of the second insulating bracket portion 138 is aligned with the second oil outlet 130b of the stator bracket 130 to receive the cooling oil, and the cooling oil then flows out through the outlet port 139b of the internal channel 139 and is directly dripped by gravity onto copper sheets of the three-phase terminal buses (located in corresponding three terminal slots 138a of the second insulating bracket portion 138) so as to form a second flow channel (B). The second flow channel (B) allows the cooling oil to directly cool the stator three-phase terminals 134. In some embodiments of the present invention, the terminal slots 138a of the second insulating bracket portion 138 are aligned with the grids 136b of the first insulating bracket portion 136 in the radial direction RD respectively. This structure establishes the first flow channel (A) and the second flow channel (B) on two opposite sides of the three-phase terminals, and cool the stator three-phase terminals 134 indirectly and directly respectively to achieve better cooling effect.

An external housing (not shown in the drawings) can be further provided around the motor stator three-phase terminal cooling structure, and the cooling oil dripped from the first flow channel (A) and the second flow channel (B) can be reserved or recycled within the external housing. The cooling oil can be collected and recycled by the circulation device. The cooling oil can be sent to the oil inlet 132 of the stator bracket 130 again for another cooling cycle after passing through the stator body 110.

The motor stator three-phase terminal cooling structure disclosed herein adds a cooling structure of stator three-phase terminals by means of its stator bracket and insulating bracket. The insulating bracket contains a first flow channel and a second flow channel. The first flow channel receives cooling oil from the first oil outlet of the stator bracket and has multiple grids. The second flow channel receives the cooling oil from the second oil outlet of the stator bracket and has an internal channel. By means of the first flow channel and the second flow channel, the cooling oil indirectly and directly thermally coupled to the opposite sides of the stator three-phase terminals to achieve the heat dissipation.

## Claims

1. A motor stator three-phase terminal cooling structure (100), comprising:
a stator body (110) comprising a plurality of stator cooling channels (111) and a plurality of stator windings (112);
a stator bracket (130) connected to the stator body (110), the stator bracket (130) having a first oil outlet (130a) and a second oil outlet (130b) on a side facing away from the stator body (110) to be connected to the stator cooling channels (111);
three-phase terminals (134) electrically connected to the stator windings (112) respectively; and
an insulating bracket (ISB) disposed on the side of the stator bracket (130) facing away from the stator body (110) and at least partially covering the three-phase terminals (134), and the insulating bracket (ISB) having a first flow channel (A) and a second flow channel (B),
wherein the first flow channel (A) receives cooling oil from the first oil outlet (130a) and has multiple grids (136b),
wherein the second flow channel (B) receives the cooling oil from the second oil outlet (130b) and has an internal channel (139).

2. The motor stator three-phase terminal cooling structure (100) of claim 1, wherein the insulating bracket (ISB) comprises a first insulating bracket portion (136) and a second insulating bracket portion (138), and the three-phase terminals (134) are located between the first insulating bracket portion (136) and the second insulating bracket portion (138).

3. The motor stator three-phase terminal cooling structure (100) of claim 2, wherein the first flow channel (A) is formed on the first insulating bracket portion (136), and a side of the first insulating bracket portion (136) facing the stator bracket (130) has a concave groove (136a) serving as a cooling oil receiving port of the first flow channel (A), and the concave groove (136a) is aligned with the first oil outlet (130a).

4. The motor stator three-phase terminal cooling structure (100) of claim 3, wherein the concave groove (136a) and the grids (136b) are located on two opposite sides of the first insulating bracket portion (136).

5. The motor stator three-phase terminal cooling structure (100) of claim 4, wherein the first insulating bracket portion (136) has an inclined plane allowing the cooling oil to be flowed down from the concave groove (136a) by gravity, and then flows sequentially to three of the grids (136b) corresponding to the three-phase terminals (134) to form the first flow channel (A).

6. The motor stator three-phase terminal cooling structure (100) of claim 2, wherein the grids (136b) are a plurality of depressions on the first insulating bracket portion (136) and form a three-stage-stepped arrangement structure.

7. The motor stator three-phase terminal cooling structure (100) of claim 2, wherein the second flow channel (B) is formed on the second insulating bracket portion (138), and the second insulating bracket portion (138) has the internal channel (139), and an inlet port of the internal channel (139) is aligned with the second oil outlet (130b) to receive the cooling oil.

8. The motor stator three-phase terminal cooling structure (100) of claim 7, wherein the second insulating bracket portion (138) comprises a plurality of terminal slots (138a), and the terminal slots (138a) are adjacent to an outlet port (139b) of the internal channel (139).

9. The motor stator three-phase terminal cooling structure (100) of claim 8, wherein the terminal slots (138a) are aligned with the grids (136b) respectively.

10. The motor stator three-phase terminal cooling structure (100) of claim 8, wherein the terminal slots (138a) are arranged side by side to accommodate connection ends (134b) of the three-phase terminals (134), and the terminal slots (138a) are adjacent to the outlet port (139b) of the internal channel (139).

11. The motor stator three-phase terminal cooling structure (100) of claim 10, wherein the cooling oil flows out from the outlet port (139b) of the internal channel (139) is directly dripped onto the three-phase terminals (134) by gravity.

12. The motor stator three-phase terminal cooling structure (100) of claim 1, wherein the stator body (110) has a circumferential outer wall (110d), and the stator cooling channels (111) are located between the stator windings (112) and the circumferential outer wall (110d).

13. The motor stator three-phase terminal cooling structure (100) of claim 1, wherein a side of the stator bracket (130) facing the stator body (110) has an bracket cooling channel (131) connected to the stator cooling channels (111), and the first oil outlet (130a) and the second oil outlet (130b) are connected to the bracket cooling channel (131).

14. The motor stator three-phase terminal cooling structure (100) of claim 13, wherein the bracket cooling channel (131) is an annular continuous flow channel.

15. The motor stator three-phase terminal cooling structure (100) of claim 1, wherein the stator bracket (130) has a plurality of through holes (135) through which the three-phase terminals (134) are electrically connected to the stator windings (112) respectively.
